(19) Europäisches Patentamt
European Patent Office
Office européen des brevets

(11) EP 0 683 204 B1

(12) EUROPEAN PATENT SPECIFICATION

(45) Date of publication and mention of the grant of the patent:
**31.03.1999 Bulletin 1999/13**

(51) Int Cl.$^6$: **C08L 23/08**, C08L 27/12

(21) Application number: **95107194.3**

(22) Date of filing: **12.05.1995**

(54) **Compositions based on ethylene/chlorotrifluoroethylene copolymers having high thermal stability**

Hochwärmebeständige Äthylen/Chlorotrifluoroäthylen Copolymerzusammensetzungen

Compositions à base de copolymères éthylène/chlorotrifluoroéthylène, stables à la chaleur

(84) Designated Contracting States:
**AT BE CH DE DK ES FR GB GR IE IT LI NL PT SE**

(30) Priority: **19.05.1994 IT MI941012**

(43) Date of publication of application:
**22.11.1995 Bulletin 1995/47**

(73) Proprietor: **AUSIMONT U.S.A. Inc.**
**Morristown New Jersey 07960 (US)**

(72) Inventors:
- **Chen, Chii-Shu**
  **East Hanover, NJ 07936 (US)**
- **Chapoy, L. Lawrence**
  **Barrington Hills, Illinois 60010 (US)**

(74) Representative: **Sama, Daniele, Dr. et al**
**Sama Patents**
**Via Morgagni, 2**
**20129 Milano (IT)**

(56) References cited:
**EP-A- 0 642 921**
**WO-A-89/02447**
**WO-A-90/15828**
**WO-A-95/12634**
**US-A- 4 539 354**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 683 204 B1

## Description

The present invention relates to compositions based on ethylene/chlorotrifluoroethylene copolymers having high thermal stability.

As known, ethylene/chlorotrifluoroethylene copolymers have superior mechanical, electric and chemical properties both at low and at high temperatures. Therefore, they are particularly suitable for the manufacture of valves, fittings, pipes, insulators for electric cables, plates, films, etc. to be used at high temperatures in chemically aggressive environments. In order to improve mechanical properties at high temperatures, the basic monomeric structure is usually modified by adding small amounts (from 0.1 to 10% by moles) of a third fluorinated comonomer, such as perfluoropropylvinylether, as described for instance in US patent 3,624,250.

Because of high melting temperature (higher than 220°-C), extrusion or molding of such copolymers needs processing temperatures higher than 250°C, generally from 260°C to 320°C. At these temperatures ethylene/chlorotrifluoroethylene copolymers tend to degrade, with formation of bubbles, product discoloration and loss of chemical, electric and mechanical properties. The thermal degradation is mainly due to dehydrohalogenation reactions with formation of polyenic sequences in the chain and evolvement of hydrochloric acid and hydrofluoric acid. From the combined action of such acids derives a quick corrosion of metal parts of equipment used for polymer processing. It is to be noted that hydrofluoric acid, although forming in lower amounts with respect to hydrochloric acid, is chemically very aggressive hence it is necessary to reduce its formation to the utmost. It is also known that metal alloys based on iron have a catalytic effect on dehydrohalogenation reactions. Therefore, all the metal parts coming into contact with the molten polymer (feeding barrel, screw, nozzles, extrusion head, die, etc.) cannot be made with standard steels, but they require the utilization of particular and expensive metal alloys having high resistance to corrosion, such as Hastelloy$^{(R)}$ C.

To thermally stabilize ethylene/chlorotrifluoroethylene copolymers, it is known the use of complex combinations of various types of antioxidants, as those described in US Patents Nos. 3,745,145, 3,773,698 and 4,539,354. They are mixtures based on polyhydric phenol phosphites and carboxylic acid salts with metals of Group II of the Periodic Table, in combination with other stabilizing products, such as thio-dipropionic acid derivatives, alkaline-earth metal oxides and (4-hydroxy-5-alkylphenyl) alkanoic acid esters. Such systems, although exerting a good stabilizing effect on the molten polymer, do not always give satisfactory results as regards colour and surface appearance of the final product, especially when severe processing conditions are used (high temperatures, extended standing times, etc.), such as for instance in injection molding of large parts, during which formation of surface defects is easier (spotting, blistering, etc.).

The Applicant has now surprisingly found that the above mentioned drawbacks can be overcome by adding to ethylene/chlorotrifluoroethylene copolymers an ionomer as defined hereinunder. Such ionomer exerts on the fluorinated polymer both an action of thermal stabilization, so that during melt processing at high temperatures (higher than 250°C) appearance of undesired discolorations is avoided and evolvement of HCl and HF is considerably reduced, and an action of processing aid, with an effect of surface lubrication during processing steps and thus a reduction of residence times.

Therefore object of the present invention is a polymeric composition consisting essentially of:

(a) an ethylene/chlorotrifluoroethylene (CTFE) copolymer;
(b) an ionomer comprising monomeric units containing anionic groups bound to metal ions.

The amount of ionomer is generally comprised between 0.01 and 5%, preferably between 0.02 and 3%, more preferably between 0.05 and 1% by weight with respect to the weight of the ethylene/CTFE copolymer.

In particular, the ionomer can be selected from the copolymers of formula:

$$-(CH_2-CR_1-R_2)_m-(CH_2-\underset{\displaystyle (R_4)_k-X^-M^+}{\underset{|}{CR_3}})_n- \qquad (I)$$

wherein:

$R_1$, $R_3$ are -H or alkyls $C_1$-$C_4$; $R_2$ is -H, an alkyl $C_1$-$C_8$, an aryl $C_6$-$C_{10}$, or an arylalkyl or alkylaryl $C_7$-$C_{14}$, optionally containing an ester group -COOR wherein R is an alkyl $C_1$-$C_6$; k is 0 or 1; $R_4$ is an alkylene $C_1$-$C_8$, an arylene $C_6$-$C_{10}$, or an arylalkylene or alkylarylene $C_7$-$C_{14}$; $X^-$ is a $-COO^-$ or $-SO_3^-$ group; $M^+$ is a metal ion; m is from 5 to 6,000; n is from 1 to 3,000; the m/n ratio is such that the amount of units containing anionic groups present in the ionomer is from 3 to 35% by moles, preferably from 15 to 30% by moles.

Ionomers of this type are described, for instance, in US Patents 3,338,739, 3,870,841, 4,381,376, and can be found on the market with the trademarks Aclyn(R) (Allied Signal, Inc.), Surlyn(R) (Du Pont), Iotek(R) (Exxon), Primacor(R) (Dow Chemical Co.).

In the formula (I), $R_1$ and $R_3$ are preferably -H or $-CH_3$, $R_2$ is preferably -H, an alkyl $C_1$-$C_4$, or a phenyl $-C_6H_5$; $R_4$ is preferably an alkylene $C_1$-$C_4$ or a phenylene $-C_6H_4$-; $M^+$ is preferably an ion of a metal selected from alkali or alkaline-earth metals, or from Zn, Pb, Cd, Al.

In particular, the ionomer can be selected from the products of formula:

(1) 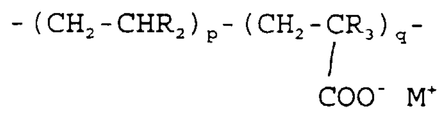 (II)

wherein:
$R_2$, $R_3$ are -H or $-CH_3$; $M^+$ is a metal ion as defined above; p is from 10 to 4,000; q is from 5 to 2,000;

(2) 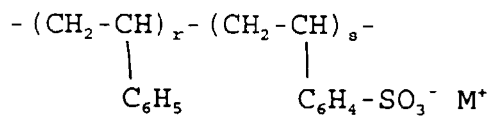 (III)

wherein:
$M^+$ is a metal ion as defined above; r is from 5 to 2,000; s is from 1 to 1,000.

The ethylene/CTFE copolymers generally comprise from 40 to 60%, preferably from 45 to 55%, by moles of ethylene and from 40 to 60%, preferably from 45 to 55%, by moles of CTFE. They generally have a Melt Flow Index (MFI, measured according to ASTM D-1238 and D-3275 standards) of from 0.05 to 1,000 g/10 min, preferably from 0.1 to 800 g/10 min, even more preferably from 0.1 to 500 g/10 min. In order to improve mechanical properties at high temperatures, the ethylene/CTFE copolymers preferably comprise a third fluorinated comonomer, in amounts from 0.1 to 10% by moles, selected, for instance, from: vinyl monomers of formula $R-CF=CF_2$ or $RO-CF=CF_2$, wherein R is a fluoroalkyl $C_2$-$C_8$, for instance perfluoropropylvinylether (see US Patent 3, 624,250); perfluoroalkylethylenes of formula $R_f-CH=CH_2$, where $R_f$ is a perfluoroalkyl having up to 25 carbon atoms (see EP Patent 185,242); perfluoroisoalkoxyperfluoroalkylethylenes, as described in EP Patent 185,241; 3,3,3-trifluoro-2-trifluoromethyl propene, as described in US Patent 3,847,881; fluorovinyl monomers of formula $CH_2=CF-R_f$, where $R_f$ is a perfluoroalkyl $C_2$-$C_{10}$, as described in US Patent 4,513,129.

In a preferred embodiment, the compositions object of the present invention comprise, besides the ionomer, an additional component (c) selected from the following conventional stabilizers or mixtures thereof: a transesterification product between a polyhydric phenol having from 6 to 50 carbon atoms and an organic triphosphite having up to 60 carbon atoms; a thioester (for instance distearylthiodipropionate); an organic phosphite (for instance tris(2,4-ditertbutylphenyl)phosphite); dibutylmaleate; N-phenyl-maleimide; sodium formiate; N,N-methaphenylene dimaleimide; 9,10-dihydroanthracene; triallyl cyanurate; triallyl isocyanurate; hindered phenolic antioxidants.

In particular, it can be used as component (c) a transesterification product between: (i) a polyhydric phenol selected from : 1,1,3-tri(2-methyl-4-hydroxy-5-terbutyl-phenyl)butane; phenols of formula:

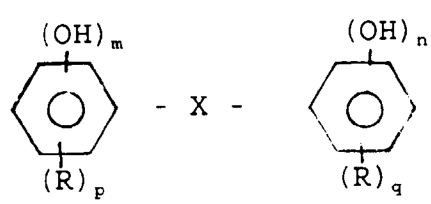

wherein: X is oxygen, sulphur or an alkylene, cycloalkylene, arylene, alkylarylene, alkylcycloalkylene group; the groups R, equal or different from each other, are hydrogen or alkyls $C_1$-$C_{18}$; m and n are integers from 1 to 5, p and q are integers from 0 to 4, with the proviso that the sums m+p and n+q are not greater than 5; and (ii) an organic triphosphite, free from phenolic hydroxy groups and having up to 60 carbon atoms, obtainable by transesterification of a phenol with an organic phosphite (see for instance US Patent 4,539,354).

As regards hindered phenolic antioxidants, they can be selected for instance from the following products:

(a)

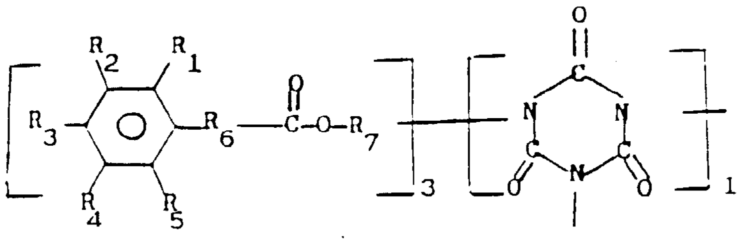

wherein: at least one of the substituents from $R_1$ to $R_5$ is -OH, the remaining substituents being hydrogen or alkyls $C_1$-$C_6$; $R_6$ and $R_7$ are alkylene groups $C_1$-$C_{10}$;

(b) a (4-hydroxy-di-alkylphenyl)alkanoic acid ester of formula:

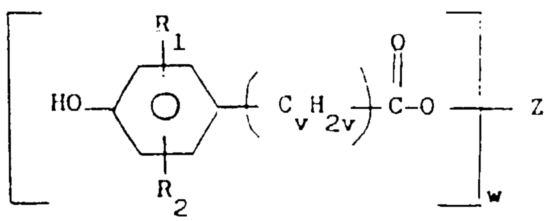

wherein: $R_1$ is methyl, ethyl, or an alkyl $C_3$-$C_{10}$ branched in alpha position; $R_2$ is hydrogen, methyl, ethyl, or an alkyl $C_3$-$C_{10}$ branched in alpha position; v is an integer from 1 to 6, w is an integer from 2 to 6; Z is a hydrocarbon group of formula $-C_yH_{2y+z-w}$, where y is an integer from 2 to 18 when w is 2, or an integer from 3 to 6 when w is greater than 2, y being in any case equal to or greater than w.

The amount of components (c) optionally present in the compositions object of the present invention is generally comprised between 0.01 and 5%, preferably between 0.05 and 1%, by weight with respect to the weight of the ethylene/CTFE copolymer.

The present invention will be now better illustrated by the following working examples, which have a merely illustrative purpose but not limitative of the scope of the invention itself.

## EXAMPLE 1

100 parts by weight of an ethylene/CTFE copolymer with molar ratio 50/50, made and commercialized by Ausimont USA Inc. with the trademark HALAR(R) E/CTFE, were dry mixed in a high intensity Henschel mixer with the following stabilizing system:

0.375 parts by weight of a polyhydric phenol phosphite, sold by Argus Chemical Corp. with the trademark Mark(R) 260; and 0.606 parts by weight of an ethylene/acrylic acid ionomer, containing 5% by moles of acrylic acid units by 100% in the form of sodium salt, and having a molecular weight of 1425, sold by Allied-Signal Inc. with the trademark Aclyn(R) 276 A.

The composition was then closely mixed in the molten state and submitted to pelletization using a double screw extruder. The pellets were then finely milled in liquid nitrogen and sieved with a 40 mesh sieve. The powder passed through the sieve was submitted to the following test.

### Thermal stability to dehydrohalogenation

500 mg of sample were put in a platinum reactor which was heated in oven at 290°C for 1 hour; dry nitrogen was caused to flow through the reactor and the outflowing decomposition gases were sent into a quartz tube filled with a 0.02 N NaOH solution; the $F^-$ and $Cl^-$ ion concentrations were determined by ionic chromatography. The results are

reported in Table 1.

The dehydrohalogenation tests were carried out on three different samples: the powder of the polymeric composition as such (Example 1A); 100 parts by weight of the same polymer powder mixed with 11.5 parts by weight of metal powder constituted by standard steel DIN 30 Cr Mo V9, commonly used for the manufacture of feeding barrels and screws for extruders and injection molding apparatus (Example 1B);
100 parts by weight of the same polymer powder mixed with 12.9 parts by weight of metal powder constituted by a special alloy Hastelloy(R) C-276, commonly used to avoid corrosion by fluoropolymers (Example 1C). The polymer/metal ratio is representative of the conditions practically encountered when the molten polymer comes into close contact with the metal parts of an extruder or of an injection molding apparatus.

**EXAMPLE 2** (comparative)

Example 1 was repeated in the same conditions using as stabilizing system of the HALAR(R) E/CTFE copolymer the following mixture:

0.300 pars by weight of a 2:1 mixture consisting of a polyhydric phenol phosphite and of zinc 2-ethyl-silate, sold by Argus Chemical Corp. with the trademark Mark(R) 158; and 0.150 parts by weight of distearylthiodipropionate.

The results of the thermal stability tests are reported in Table 1.

TABLE 1

| EX. | SAMPLE | $F^-$ (ppm) | $Cl^-$ (ppm) |
|---|---|---|---|
| 1A | polymeric composition | 7 | 22 |
| 1B | polymeric composition + steel DIN 30 CrMo V9 | 7 | 46 |
| 1C | polymeric composition + Hastelloy(R) C-276 | 6 | 26 |
| 2A(*) | polymeric composition | 6 | 75 |
| 2B(*) | polymeric composition + steel DIN 30 CrMo V9 | 18 | 535 |
| 2C(*) | polymeric composition + Hastelloy(R) C-276 | 4 | 90 |

(*) comparative

**EXAMPLE 3**

100 parts by weight of an ethylene/CTFE copolymer in molar ratio 50/50, made and commercialized by Ausimont USA Inc. with the trademark HALAR(R) E/CTFE, were dry mixed in a high intensity Henschel mixer with the following stabilizing system:

0.375 parts by weight of Mark(R) 260 and 0.103 parts by weight of an ethylene/acrylic acid ionomer, containing 20% by moles of acrylic acid units at 100% in the form of potassium salt, and having a molecular weight of 339, sold by Allied-Signal Inc. with the trademark Aclyn(R) ACX 316.

The composition was then closely mixed in the molten state and submitted to pelletization using a double screw extruder. The so obtained pellets were used for carrying out the following test.

**Corrosion test**

Two carbon steel plates having a 3 mm thickness were put in an oven and kept at a distance of 50 mm by means of a Hastelloy(R) C-276 ring having internal diameter of 50 mm. The oven was brought to 290°C, a temperature commonly used for HALAR(R) processing. 15 g of granules of the HALAR(R) copolymer described above were put inside the ring; the copolymer sample was renewed every 24 hours. The test lasted 6 months on the whole. In that way it was possible to determine the corrosion rate of the metal plates in the presence of the vapours released by HALAR(R) submitted to thermal treatment. The average value of corrosion, expressed as mm/year, was obtained by averaging the values of thickness decrease measured on six upper plates and six lower plates. The test was interrupted in all the cases when during the test a visible perforation in at least one of the two plates appeared. The results are reported in Table 2.

**EXAMPLE 4** (comparative)

Example 3 was repeated in the same conditions using as stabilizing system of the HALARR) E/CTFE copolymer the following mixture:

0.300 parts by weight of Mark(R) 158; and 0.150 parts by weight of distearylthiodipropionate. The results of the corrosion tests are reported in Table 2.

TABLE 2

| EX. | Corrosion rate (mm/year) |
|---|---|
| 3 | 0.25 |
| 4(*) | 25 |

(*) comparative

From examples 1-4 it clearly results that the use of ionomers as stabilizers of ethylene/CTFE copolymers allows to drastically reduce HF and HCl formation and corrosion of iron based alloys. In particular, we can conclude that, with the compositions object of the present invention, it is possible to use extrusion and injection molding equipment made with standard steels instead of special alloys having high corrosion resistance. In fact, for samples of commercial polyvinylidenfluoride (PVDF), which, as known, can be processed with standard steel equipment, a corrosion speed equal to 0.23 mm/year was measured at a testing temperature of 240°C (the typical processing temperature of PVDF), a value substantially equal to that obtained for the HALAR(R)/ionomer compositions.

## EXAMPLE 5

100 parts by weight of an ethylene/CTFE copolymer in molar ratio 50/50, made and commercialized by Ausimont USA Inc. with the trademark HALAR(R) E/CTFE, were dry mixed in a high intensity Henschel mixer with the following stabilizing system:

0.225 parts by weight of Mark(R) 260; 0.150 parts by weight of distearylthiodipropionate and 0.611 parts by weight of an ethylene/acrylic acid ionomer, containing 5% by moles of acrylic acid units by 100% in the form of zinc salt, and having a molecular weight of 2868.4, sold by Allied-Signal Inc. with the trademark Aclyn(R) 295 A.

The composition was then closely mixed in the molten state and submitted to pelletization using a double screw extruder. The pellets were then injection-molded in a Boy-Mipronic-plus(R) Mipronic-plus(R) at 290°C with a residence time in the mold of 200 sec, in order to obtain rectangular plates having dimensions of 2x3 x 1/16 inches. The plates were submitted to tests of melt stability and of tendency to bubble formation, according to the following methods.

### Melt stability

The Melt Flow Index (MFI) of the samples was measured after molding, with a load of 2160 g for 10 and 30 min at 290°C, according to ASTM D-1238 and D-3275 standards.

The same measurements were carried out on 7 g of pelletized sample as such, i.e. before being molded. The melt stability is given by:

$$\text{Melt Stability} = \frac{\text{(MFI after molding) - (MFI as such)}}{\text{(MFI as such)}} * 100$$

### Number of bubbles

The tendency to form bubbles was determined after the plates were heated in the MFI apparatus for 10 min at 290°C. The samples were cut transversally so as to obtain thin slices, which were examined by an optical microscope with a 30x magnification: the number of bubbles was visually determined for each transversal section.

The results are reported in Table 3.

## EXAMPLE 6

Example 5 was repeated in the same conditions using as stabilizing system of the HALAR(R) E/CTFE copolymer the following mixture:

0.225 parts by weight of Mark(R) 260; 0.150 parts by weight of distearylthiodipropionate; and 0.606 parts by weight of Aclyn(R) 276 A.

The results are reported in Table 3.

**EXAMPLE 7** (comparative)

Example 5 was repeated in the same conditions using as stabilizing system of the HALAR(R) E/CTFE copolymer the following mixture:

0.300 parts by weight of Mark(R) 158; and 0.150 parts by weight of distearylthiodipropionate.

The results are reported in Table 3.

TABLE 3

| EX. | MELT STABILITY (%) | BUBBLES (n) |
|---|---|---|
| 5 | 1.7 | 0 |
| 6 | 4.0 | 1 |
| 7(*) | - 1.0 | 8 |

(*) comparative

**EXAMPLE 8**

100 parts by weight of an ethylene/CTFE copolymer in molar ratio 50/50, produced and commercialized by Ausimont USA Inc. with the trademark HALAR(R) E/CTFE, were dry mixed in a high intensity Henschel mixer with the following stabilizing system:

0.606 parts by weight of Aclyn(R) 276 A.

The composition was then closely mixed in the molten phase and submitted to pelletization using a double screw extruder. The pellets were then injection molded in a 25 tons apparatus by Negri e Bossi firm (Milano, Italy), to obtain discs having a 100 mm diameter and a 3 mm thickness. At the beginning it was operated for a time long enough to bring the machine to a steady state with a melt temperature at the nozzle outlet of 275°C. The machine was then stopped for 10 min (stillstand conditions), and then the molding cycle restarted. Upon reaching again a steady state, the equipment was stopped for further 20 min. The production cycle was then restarted. This test had the purpose of simulating the conditions obtained in the equipment when it is necessary to mold large parts which require long residence times. On 6 discs produced in steady state and on 6+6 discs produced immediately after each stop of the equipment, the White Index, (WI) was measured by a Gardner colorimeter, according to the ASTM D-1925 and E-313 standards. The White Index is defined as:

$$WI = (53.55X - 63.5Y + 17.78Z)/Y^{½}$$

where X, Y, Z are the three basic color components (tristimulus components). In Table 4 the WI values averaged on 6 samples are reported. The number of 6 samples was chosen considering that the amount of polymer contained in each disc is about 1/6 of the amount of polymer present in the dosing volume of the molding machine. The results are reported in Table 4.

**EXAMPLE 9**

Example 8 was repeated in the same conditions using as stabilizing system of the HALAR(R) E/CTFE copolymer the following mixture:

0.375 parts by weight of Mark(R) 260; and 0.611 parts by weight of Aclyn(R) 276 A.

The results are reported in Table 4.

**EXAMPLE 10**

Example 8 was repeated in the same conditions using as stabilizing system of the HALAR(R) E/CTFE copolymer the following mixture:

0.375 parts by weight of Mark(R) 260; and 0.103 parts by weight of Aclyn(R) ACX 316.

The results are reported in Table 4.

**EXAMPLE 11 (comparative)**

Example 8 was repeated in the same conditions using as stabilizing system of the HALAR(R) E/CTFE copolymer the following mixture:

0.300 parts by weight of Mark(R) 158; and 0.150 parts by weight of distearylthiodipropionate.

The results are reported in Table 4.

TABLE 4

| EX. | WHITE INDEX | | |
|---|---|---|---|
| | at steady state | after a 10' stop | after a 20' stop |
| 8 | 66 | 63 | 64 |
| 9 | 71 | 68 | 66 |
| 10 | 68 | 64 | 64 |
| 11(*) | 59 | 52 | 50 |

(*) comparative

## Claims

1. Polymeric composition consisting essentially of:

   (a) an ethylene/chlorotrifluoroethylene (CTFE) copolymer;
   (b) an ionomer comprising monomeric units containing anionic groups bound to metal ions.

2. Polymeric composition according to claim 1, wherein the amount of ionomer is from 0.01 to 5% by weight with respect to the ethylene/CTFE copolymer weight.

3. Polymeric composition according to claims 1 or 2, wherein the ionomer is selected from the copolymers of formula:

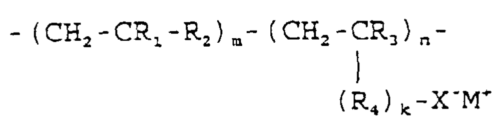 (I)

wherein:
$R_1$, $R_3$ are -H or alkyls $C_1$-$C_4$; P is -H, an alkyl $C_1$-$C_8$, an aryl $C_6$-$C_{10}$, or an arylalkyl or alkylaryl $C_7$-$C_{14}$, optionally containing an ester group -COOR wherein R is an alkyl $C_1$-$C_6$; k is 0 or 1; $R_4$ is an alkylene $C_1$-$C_8$, an arylene $C_6$-$C_{10}$, or an arylalkylene or alkylarylene $C_7$-$C_{14}$; $X^-$ is a $-COO^-$ or $-SO_3^-$ group; $M^+$ is a metal ion; m is from 5 to 6,000; n is from 1 to 3,000; the m/n ratio is such that the amount of units containing anionic groups present in the ionomer is from 3 to 35% by moles.

4. Polymeric composition according to claim 3, in which the ionomer is selected from the products of formula:

(1) 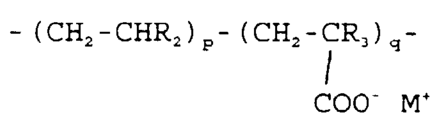 (II)

wherein:
$R_2$, $R_3$ are -H or $-CH_3$; $M^+$ is a metal ion as defined above; p is from 10 to 4,000; q is from 5 to 2,000;

(2) 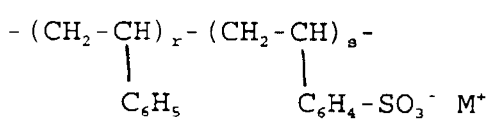 (III)

wherein:
$M^+$ is a metal ion as defined above; r is from 5 and 2,000; s is from 1 and 1,000.

5. Polymeric composition according to anyone of the previous claims, wherein the ethylene/CTFE copolymer comprises from 40 to 60% by moles of ethylene and from 40 to 60% by moles of CTFE.

6. Polymeric composition according to anyone of the previous claims, wherein the ethylene/CTFE copolymer comprises a third fluorinated comonomer, in an amount of from 0.1 to 10% by moles.

7. Polymeric composition according to anyone of the previous claims, comprising, besides the ionomer, a stabilizer selected from: a transesterification product between a polyhydric phenol having from 6 to 50 carbon atoms and an organic triphosphite having up to 60 carbon atoms; a thioester; an organic phosphite; dibutylmaleate; N-phenylmaleimide; sodium formiate; N,N-methaphenylene dimaleimide; 9,10-dihydroanthracene; triallyl-cyanurate; triallyl-isocyanurate; hindered phenolic antioxidants.

**Patentansprüche**

1. Polymerzusammensetzung, welche im wesentlichen besteht aus:

   (a) einem Ethylen/Chlortrifluorethylen(CTFE)-Copolymer;
   (b) einem Ionomer, welches Monomer-Einheiten umfaßt, die an Metallionen gebundene anionische Gruppen enthalten.

2. Polymerzusammensetzung nach Anspruch 1, worin die Menge an Ionomer 0,01 bis 5 Gew.-% bezogen auf das Gewicht des Ethylen/CTFE-Copolymers beträgt.

3. Polymerzusammensetzung nach den Ansprüchen 1 oder 2, worin das Ionomer aus den Copolymeren der folgenden Formel ausgewählt ist:

$$-(CH_2-CR_1-R_2)_m-(CH_2-\underset{\underset{(R_4)_k-X^-M^+}{|}}{CR_3})_n- \qquad (I)$$

worin $R_1$, $R_3$ für -H oder $C_1$-$C_4$-Alkyl stehen; $R_2$ -H, ein $C_1$-$C_8$-Alkyl, ein $C_6$-$C_{10}$-Aryl oder ein $C_7$-$C_{14}$-Arylalkyl oder -Alkylaryl bedeutet, welches gegebenenfalls eine Estergruppe -COOR enthält, worin R für ein $C_1$-$C_6$-Alkyl steht; k 0 oder 1 ist; $R_4$ ein $C_1$-$C_8$-Alkylen, ein $C_6$-$C_{10}$-Arylen oder ein $C_7$-$C_{14}$-Arylalkylen oder -Alkylarylen bedeutet; $X^-$ für eine $-COO^-$- oder $-SO_3^-$-Gruppe steht; $M^+$ ein Metallion ist; m 5 bis 6000 beträgt; n 1 bis 3000 beträgt; das Verhältnis m/n derart ist, daß die Menge an in dem Ionomer vorhandenen Einheiten, die anionische Gruppen enthalten, 3 bis 35 Mol-% beträgt.

4. Polymerzusammensetzung nach Anspruch 3, worin das Ionomer aus den Produkten der folgenden Formeln ausgewählt ist:

   (1)

$$-(CH_2-CHR_2)_p-(CH_2-\underset{\underset{COO^-\ M^+}{|}}{CR_3})_q- \qquad (II)$$

   worin $R_2$, $R_3$ -H oder $-CH_3$ bedeuten; $M^+$ ein wie oben definiertes Metallion ist; p 10 bis 4000 beträgt; q 5 bis 2000 beträgt;
   (2)

$$-(CH_2\text{-}CH)_r\text{-}(CH_2\text{-}CH)_s\text{-} \quad (III)$$
$$\qquad | \qquad\qquad |$$
$$C_6H_5 \qquad C_6H_4\text{-}SO_3^- \; M^+$$

worin $M^+$ ein wie oben definiertes Metallion ist; r 5 bis 2000 beträgt; s 1 bis 1000 beträgt.

5. Polymerzusammensetzung nach irgendeinem der vorhergehenden Ansprüche, worin das Ethylen/CTFE-Copolymer 40 bis 60 Mol-% Ethylen und 40 bis 60 Mol-% CTFE umfaßt.

6. Polymerzusammensetzung nach irgendeinem der vorhergehenden Ansprüche, worin das Ethylen/CTFE-Copolymer ein drittes fluoriertes Comonomer in einer Menge von 0,1 bis 10 Mol-% umfaßt.

7. Polymerzusammensetzung nach irgendeinem der vorhergehenden Ansprüche, welche neben dem lonomer einen Stabilisator umfaßt, der ausgewählt ist aus einem Umesterungsprodukt zwischen einem mehrwertigen Phenol mit 6 bis 50 Kohlenstoffatomen und einem organischen Triphosphit mit bis zu 60 Kohlenstoffatomen; einem Thioester; einem organischen Phosphit; Dibutylmaleat; N-Phenylmaleimid; Natriumformiat; N,N-Metaphenylendimaleimid; 9,10-Dihydroanthracen; Triallylcyanurat; Triallylisocyanurat; gehinderten phenolischen Antioxidationsmitteln.

**Revendications**

1. Composition polymère consistant essentiellement en :

   (a) un copolymère éthylène/chlorotrifluoroéthylène (CTFE) ;
   (b) un ionomère comprenant des unités monomères contenant des groupes anioniques liés à des ions métalliques.

2. Composition polymère selon la revendication 1, dans laquelle la quantité d'ionomère est de 0,01 à 5 % en poids par rapport au poids du copolymère éthylène/CTFE.

3. Composition polymère selon l'une des revendications 1 ou 2, dans laquelle l'ionomère est choisi parmi les copolymères de formule :

$$-(CH_2\text{-}CR_1\text{-}R_2)_m\text{-}(CH_2\text{-}CR_3)_n\text{-} \quad (I)$$
$$\qquad\qquad |$$
$$(R_4)_k\text{-}X^-M^+$$

dans laquelle :

- $R_1$, $R_3$ représentent -H ou alkyle en $C_1$-$C_4$ ;
- $R_2$ représente -H, un alkyle en $C_1$-$C_8$, un aryle en $C_6$-$C_{10}$ ou un arylalkyle ou alkylaryle en $C_7$-$C_{14}$, contenant facultativement un groupe ester -COOR, où R représente un alkyle en $C_1$-$C_6$ ;
- k vaut 0 ou 1 ;
- $R_4$ représente un alkylène en $C_1$-$C_8$, un arylène en $C_6$-$C_{10}$ ou un arylalkylène ou alkylarylène en $C_7$-$C_{14}$ ;
- $X^-$ est un groupe $-COO^-$ ou $-SO_3^-$ ;
- $M^+$ est un ion métallique ;
- m est de 5 à 6 000 ;
- n est de 1 à 3 000 ;
- le rapport m/n est tel que la quantité d'unités contenant des groupes anioniques présentes dans l'ionomère est de 3 à 35 % en moles.

4. Composition polymère selon la revendication 3, dans laquelle l'ionomère est choisi parmi les produits de formule :

   (1)

$$-(CH_2-CHR_2)_p-(CH_2-\underset{\displaystyle COO^- \ M^+}{\underset{|}{C}}R_3)_q- \qquad (II)$$

dans laquelle:

- $R_2$, $R_3$ représentent -H ou $-CH_3$ ;
- $M^+$ est un ion métallique tel que défini ci-dessus ;
- p est de 10 à 4000 ;
- q est de 5 à 2000 ;

(2)

$$-(CH_2-\underset{\displaystyle C_6H_5}{\underset{|}{C}}H)_r-(CH_2-\underset{\displaystyle C_6H_4-SO_3^- \ M^+}{\underset{|}{C}}H)_s- \qquad (III)$$

dans laquelle :

- $M^+$ est un ion métallique tel que défini ci-dessus ;
- r est de 5 à 2 000 ;
- s est de 1 à 1 000.

**5.** Composition polymère selon l'une quelconque des revendications précédentes, dans laquelle le copolymère éthylène/CTFE comprend de 40 à 60 % en moles d'éthylène et de 40 à 60 % en moles de CTFE.

**6.** Composition polymère selon l'une quelconque des revendications précédentes, dans laquelle le copolymère éthylène/CTFE comprend un troisième comonomère fluoré, dans une quantité de 0,1 à 10 % en moles.

**7.** Composition polymère selon l'une quelconque des revendications précédentes, comprenant, en dehors de l'ionomère, un stabilisant choisi parmi: un produit de transestérification entre un phénol polyvalent ayant de 6 à 50 atomes de carbone et un triphosphite organique ayant jusqu'à 60 atomes de carbone ; un thioester ; un phosphite organique ; le maléate de dibutyle ; le N-phénylmaléimide ; le formiate de sodium ; le N,N-métaphénylène dimaléimide ; le 9,10-dihydroanthracène ; le cyanurate de triallyle ; l'isocyanurate de triallyle ; les antioxydants phénoliques encombrés.